# EUROPÄISCHE PATENTSCHRIFT

(11) **EP 3 239 696 B1**
(45) Veröffentlichungstag und Bekanntmachung des Hinweises auf die Patenterteilung: **11.10.2023**
(21) Anmeldenummer: 17000651.4
(22) Anmeldetag: 18.04.2017
(51) Int. Cl.: A24C 5/34, G01N 21/89, G07C 3/14, G01N 21/952, G01N 21/95, G01N 21/898, B65B 19/28, B65B 19/22, B65B 19/30

(54) **VERFAHREN ZUR PRÜFUNG VON ZIGARETTEN ODER ZIGARETTENPACKUNGEN**
METHOD FOR TESTING CIGARETTE PACKS OR CIGARETTES
PROCÉDÉ DE CONTRÔLE DE CIGARETTES OU D'EMBALLAGES DE CIGARETTES

(30) Priorität: 29.04.2016 DE 102016005173
(43) Veröffentlichungstag der Anmeldung: 01.11.2017
(73) Patentinhaber: Focke & Co. (GmbH & Co. KG), 27283 Verden (DE)
(72) Erfinder: Linck, Christian, 27283 Verden (DE)
(74) Vertreter: Aulich, Martin

(56) Entgegenhaltungen:
- EP-A1- 2 677 273
- DE-A1- 19 753 333
- DE-A1-102008 062 370
- DE-A1-102013 008 250
- US-A1- 2014 118 570

## Beschreibung

Die vorliegende Erfindung betrifft ein Verfahren zur Prüfung von bei der Herstellung oder Verpackung von Zigaretten oder anderen rauchbaren Produkten zu prüfenden Objekten - Prüfobjekte -, bei dem wenigstens ein Prüfobjekt einer optischen Prüfung unterzogen wird.

Die optische Prüfung von Zigaretten, Zigarettenpackungen oder dergleichen ist aufgrund der hohen Produktionsgeschwindigkeiten, die mittlerweile von in der Zigarettenindustrie eingesetzten Produktionsanlagen erreicht werden, sehr schwierig. Die eingesetzten Sensoren und Kameras kommen an ihre Grenzen.

Aus der EP 2 677 273 A1 ist bekannt, die Stirnseiten von Zigaretten einer Zigarettengruppe mittels einer Sensoranordnung dreidimensional zu vermessen. Aus den Messdaten wird ein Tiefenprofil der Zigarettenstirnseiten erstellt. So kann beispielsweise geprüft werden, ob die Tiefe einer mittigen Aussparung in der Zigarettenstirnseite Produktionsvorgaben entspricht. Zusätzlich ist vorgesehen, mittels einer weiteren Sensoranordnung ein 2D-Bild der Stirnseiten der Zigarettengruppe aufzunehmen, um die Stirnseiten im Hinblick auf Qualitätsanforderungen prüfen zu können. Insofern eine Stirnseite bzw. eine Zigarette allerdings aus der Zigarettengruppe hervorragt, führt dieses Vorgehen zu ungenauen Ergebnissen. Denn aufgrund der unterschiedlichen Tiefenebenen, in denen sich die hervorragende Stirnseite einerseits und die anderen Stirnseiten andererseits befinden, kann das 2D-Bild nur für eine dieser beiden Tiefenebenen Bildinformationen ausreichender Schärfe aufweisen.

Aus der US 2014/0118570 A1 ist bekannt, von einem Sensor mit unterschiedlichen Fokusebenen zwei oder mehr separate Bilder von einem Bildobjekt aufgenommen. Die Abstände des jeweiligen Bildobjekts zu der zugeordneten Fokusebene des zugeordneten Bildes werden dann relativ miteinander verglichen. Ein Bildobjekt in einem von beispielsweise zwei Bildern wird dann als Hintergrundbildobjekt gewertet, wenn sein geringster Abstand zu einer der Fokusebenen größer ist als der Abstand des Bildobjekts des anderen Bildes zu einer der Fokusebenen. In einem solchen Fall wird das entsprechende Bildobjekt durch Subtraktion von der weiteren Analyse der Bilder ausgeschlossen.

Ausgehend hiervon ist es Aufgabe der vorliegenden Erfindung, das eingangs genannte Verfahren weiterzuentwickeln.

Diese Aufgabe wird gelöst durch ein Verfahren mit den Merkmalen des Anspruchs 1.

Danach wird erfindungsgemäß das Prüfverfahren mittels einer Lichtfeldkamera durchgeführt, die von dem mindestens einen Prüfobjekt ein (Lichtfeld-)Bild in bzw. mit drei Raumdimensionen (3D-Bild) aufnimmt. Die Lichtfeldkamera erzeugt dabei das Bild repräsentierende Rohbilddaten. Aus den Rohbilddaten werden (automatisch) Tiefeninformationen gewonnen, die im Rahmen der Auswertung des Bildes verwendet werden, um (ebenfalls automatisch) zu prüfen, ob das mindestens eine Prüfobjekt fehlerhaft ist.

Die erfindungsgemäße Verwendung der Lichtfeldkamera und die Nutzung der in den Rohbilddaten enthaltenen bzw. aus diesen abgeleiteten Tiefeninformationen im Rahmen der Bildauswertung ermöglicht eine besonders zuverlässige, optische Prüfung der Prüfobjekte, wie etwa Zigaretten, Zigarettengruppen, Zigarettenpackungen, auf Zigarettenpackungen aufliegenden Banderolen, auf diesen aufliegenden Etiketten etc., während des Produktionsprozesses, also während der Herstellung oder Verpackung der Zigaretten bzw. etwaige anderer rauchbarer Produkte.

Es versteht sich, dass insofern im Rahmen der Anmeldung von der Bearbeitung oder Auswertung von Bildern oder Bildinformationen oder von Prüfungen oder Prüfvorgängen die Rede ist, diese Maßnahmen vollautomatisch im Produktionsprozess von software- und hardwareseitig geeignet ausgebildeten Rechen- oder Computereinrichtungen vorgenommen werden. Diese können Teil der Lichtfeldkamera sein, müssen es aber nicht. Einzelne oder sämtliche Schritte könnten somit grundsätzlich von entsprechenden Einrichtungen der Lichtfeldkamera durchgeführt werden und/oder von separaten Einrichtungen. Sie sind unabhängig davon aber konzeptionell bevorzugt zusammen mit der Lichtfeldkamera Teil einer entsprechenden Prüfeinrichtung. Es versteht sich auch, dass insofern im Rahmen der Anmeldung von der Be- oder Verarbeitung von als solchen bezeichneten "Bildern" gesprochen wird, diese nicht (an einem Bildschirm) angezeigt werden müssen, sondern im Rahmen der Behandlung durch geeignete Algorithmen bzw. durch eine geeignete Software als ggf. in entsprechenden Tabellen oder anderen Strukturen zusammengefasste Informationen (automatisch) gehandhabt und prozessiert werden können.

Die Nutzung der Tiefeninformationen erlaubt unter anderem die Erzeugung von mittels bekannten Bildbearbeitungsverfahren anschließend bearbeitbaren Prüfbildern mit besonders großer Schärfentiefe. Dies gilt insbesondere für Prüfsituationen bzw. Prüfobjekte, bei denen sich das jeweilige Prüfobjekt bezogen auf die Blickrichtung der Lichtfeldkamera über oder in verschiedenen, senkrecht zu der Blickrichtung verlaufenden Ebenen - Tiefenebenen - erstreckt.

Erfindungsgemäß wird aus den Rohbilddaten ein die Tiefeninformationen umfassendes Tiefenbild erzeugt - insbesondere mittels geeigneter Software, vergleiche oben, die auch in die Lichtfeldkamera integriert sein kann - bei dem X-Y-Koordinaten einer zur Kamerablickrichtung senkrechten Ebene Werte zugeordnet sind, die (Relativ-)Abstände von von der Kamera erfassten Objekten, insbesondere des mindestens einen Prüfobjekts, von der Kamera repräsentieren - Abstandswerte -.

Aus dem Tiefenbild werden dann verschiedene Abstandswerte des Prüfobjekts ermittelt. Wenn das Prüfobjekt beispielsweise eine auf einer Zigarettenpackung aufliegende Banderole ist, könnte beispielsweise der Abstandswert der Banderolenoberfläche und der Abstandswert der darunter liegenden Zigarettenpackung ermittelt werden. Alternativ können auch die Stirnseiten von Zigaretten einer Zigarettengruppe mit der Lichtfeldkamera erfasst werden, wobei die Abstandswerte dann die (Relativ-)Abstände der einzelnen Stirnseiten von der Kamera repräsentieren.

In Fortführung dieser Gedanken kann dann vorgesehen sein, dass im Rahmen der Prüfung des Prüfobjekts auf Fehler ein Fehlersignal erzeugt wird für den Fall, dass ein oder mehrere dieser Abstandswerte eine vorbestimmte Bedingung nicht erfüllen, insbesondere einen vorbestimmten Grenzwert erreichen oder überschreiten oder sich nicht innerhalb eines vorbestimmten Werteintervalls befinden.

So könnte beispielsweise bei der Prüfung der Gruppe von Zigaretten ein Fehlersignal erzeugt werden für den Fall, dass ein oder mehrere Abstandswerte eine vorbestimmte Bedingung nicht erfüllen, insbesondere einen vorbestimmten Grenzwert erreichen oder diesen überschreiten oder sich nicht innerhalb eines vorbestimmten Werteintervalls befinden. Je nach Festlegung der Grenzwerte bzw. des Werteintervalls kann dann beispielsweise auf ein fehlerhaftes Hervorstehen einer oder mehrerer Zigarettenstirnseiten aus der Gruppe der Zigaretten geschlossen werden.

In einer anderen Variante der Prüfung des Prüfobjekts auf Fehler kann vorgesehen sein, dass ein Fehlersignal erzeugt wird für den Fall, dass das Tiefenbild bei X-Y-Koordinaten keine Abstandswerte aufweist, bei denen erwartet wird, dass diesen auf das Vorhandensein einer Zigarettenstirnseite hindeutende Abstandswerte zugeordnet sind.

Erfindungsgemäß ist dann weiter vorgesehen, aus den Rohbilddaten für mehrere oder jeden ermittelten Abstandswert ein 2D-Bild (des Prüfobjekts oder eines Prüfobjektbereichs) aus den in den Rohbilddaten dem jeweiligen Abstandswert zugeordneten Bildinformationen zu erzeugen. Die Bildinformationen können dabei unter anderem jeweils einen Grauwert oder einen Farbwert umfassen.

Die auf diese Weise erzeugten 2D-Bilder werden dann zu einem kombinierten 2D-Auswertebild zusammengesetzt, das mittels bekannter Bildverarbeitungsverfahren (Kantenerkennung, Referenzbildvergleiche etc.) zur Prüfung auf Fehler des Prüfobjekts ausgewertet wird. Das 2D-Auswertebild zeichnet sich dabei insbesondere durch besondere Schärfe sämtlicher Prüfobjektbildbereiche innerhalb des 2D-Auswertebildes aus, und zwar unabhängig davon, in welchen Tiefenebenen senkrecht zur Blickrichtung der Kamera sich das jeweilige Prüfobjekt tatsächlich erstreckt bzw. angeordnet ist.

Beispielsweise bei der Prüfung der Zigarettengruppe könnten aus dem Tiefenbild die zugehörigen Abstandswerte der Stirnseiten der verschiedenen Zigaretten der Zigarettengruppe ermittelt werden und ausgehend hiervon für jeden ermittelten Abstandswert ein entsprechendes 2D-Bild aus den in den Rohbilddaten dem jeweiligen Abstandswert zugeordneten Bildinformationen erzeugt und dann hieraus das kombinierte 2D-Auswertebild zusammengesetzt werden, in dem dann sämtliche Stirnseiten auch für den Fall mit hoher Schärfe abgebildet sind, dass sich diese in unterschiedlichen Tiefenebenen befinden sollten.

Das 2D-Auswertebild kann schließlich auf (Qualitäts-)Fehler der Zigaretten der Zigarettengruppe untersucht werden, insbesondere auf Tabakfehler oder auf Fehler der Kontur der Stirnseiten der Zigaretten etc.

Bei Anwendung der vorgenannten Konzepte in Alleinstellung oder in Kombination können verschiedene Prüfobjekte besonders vorteilhaft geprüft werden:
So kann allgemein vorgesehen sein, dass die Lichtfeldkamera ein (Lichtfeld-)Bild eines auf einer Materialbahn aufliegenden Etiketts aufnimmt, dass unter Verwendung der oben erwähnten Tiefeninformationen die räumliche Lage mindestens einer Außenkante des Etiketts relativ zu der Materialbahn ermittelt wird, und dass geprüft wird, ob diese Lage einer vorgegebenen Bedingung entspricht.

Dabei kann insbesondere die Lage der Etikettkante relativ zu einer Kante einer durch das Etikett bedeckten Ausstanzung oder Freimachung in der Materialbahn ermittelt werden oder relativ zu einer Längsaußenkante der Materialbahn.

Es kann auch die räumliche Lage der Ausstanzungs- bzw. Freimachungskante oder der Längsaußenkante ermittelt werden, ebenfalls unter Verwendung der in den Rohbilddaten enthaltenen Tiefeninformationen.

In einer weiteren vorteilhaften Weiterbildung der Erfindung erfasst die Lichtfeldkamera ein (Lichtfeld-)Bild einer auf einer ganz oder teilweise fertiggestellten Zigarettenpackung aufliegenden Banderole. Unter Verwendung der Tiefeninformationen wird dann die räumliche Lage mindestens einer Außenkante der Banderole relativ zu mindestens einer Packungsseite ermittelt, auf der die Banderole aufliegt und geprüft, ob diese Lage einer vorgegebenen Bedingung entspricht.

In einer weiteren vorteilhaften Weiterbildung der Erfindung wird mit der Lichtfeldkamera ein (Lichtfeld-)Bild einer Zigarettenpackung im Bereich ihres Deckels aufgenommen und unter Verwendung der Tiefeninformationen geprüft, ob gegebenenfalls der Deckel ungewollt bzw. fehlerhafterweise geöffnet ist. Insbesondere, indem die räumliche Lage mindestens einer Deckelkante erfasst wird.

In einer weiteren vorteilhaften Weiterbildung der Erfindung wird mit der Lichtfeldkamera ein (Lichtfeld-)Bild eines einen mindestens einen Faltlappen sowie mindestens eine Faltrille aufweisenden Faltzuschnitts für eine Zigarettenpackung aufgenommen, insbesondere im Bereich eines den mindestens einen Faltlappen des Zuschnittes entlang der mindestens einen Faltrille faltenden Faltorgans, und unter Verwendung der Tiefeninformationen die Größe oder die Form des Zuschnitts oder mindestens einer Faltrille des Zuschnitts geprüft oder die Größe, Form oder Lage mindestens eines Faltlappens des Zuschnitts.

Dabei kann unter Verwendung der Tiefeninformationen auch die räumliche Lage mindestens einer Faltrille des Zuschnitts relativ zu mindestens einer Außenkante des Faltzuschnitts oder relativ zu einer auf dem Faltzuschnitt angeordneten Markierung, insbesondere einer Druckmarke, ermittelt werden.

In einer weiteren vorteilhaften Weiterbildung der Erfindung wird mit der Lichtfeldkamera ein (Lichtfeld-)Bild mindestens eines Bereichs eines Zuschnitts oder einer Materialbahn zur Herstellung einer Zigarettenpackung aufgenommen, in dem durch eine Prägewalze Prägungen eingebracht sind oder eingebracht sein sollten. Unter Verwendung der Tiefeninformationen wird dann geprüft, ob sämtliche erwarteten Prägungen eingebracht sind oder ob die Größe oder Form der Prägungen oder deren Lage relativ zu dem Zuschnitt oder der Materialbahn fehlerfrei ist.

In einer weiteren vorteilhaften Weiterbildung der Erfindung wird mit der Lichtfeldkamera ein (Lichtfeld-)Bild eines Bereichs eines Zuschnitts oder einer Materialbahn zur Herstellung einer Zigarettenpackung aufgenommen, in dem Leimstellen aufgebracht sind oder aufgebracht sein sollten. Unter Verwendung der Tiefeninformationen wird dabei geprüft, ob sämtliche erwarteten Leimstellen aufgebracht sind oder ob die Größe oder Form der Leimstellen oder deren Lage relativ zu dem Zuschnitt oder der Materialbahn fehlerfrei ist.

Weitere Merkmale der vorliegenden Erfindung ergeben sich aus den beigefügten Patentansprüchen, der nachfolgenden Beschreibung bevorzugter Ausführungsbeispiele der Erfindung sowie aus den beigefügten Zeichnungen.

Darin zeigt:
- Fig. 1: eine Prinzipdarstellung einer Lichtfeldkamera, wie sie bei der vorliegenden Erfindung eingesetzt werden kann, in Schrägansicht,
- Fig. 2: die Prüfung einer Gruppe von Hohlfilterzigaretten mit der Lichtfeldkamera aus Fig. 1, ebenfalls in Schrägansicht,
- Fig. 3: einen Schnitt entlang der Schnittlinien III-III aus Fig. 2,
- Fig. 4: eine Prinzipdarstellung einer Verwendung der Lichtfeldkamera zur Prüfung eines auf einer Folienbahn aufgebrachten Etiketts, in Schrägdarstellung,
- Fig. 5: eine Draufsicht auf den Prüfbereich gemäß Fig. 4 aus Blickrichtung der Lichtfeldkamera,
- Fig. 6: die Darstellung entsprechend Fig. 5, allerdings mit einem fehlerhaft aufgebrachten Etikett,
- Fig. 7: einen Schnitt entlang der Schnittlinie VII-VII aus Fig. 5,
- Fig. 8: einen Schnitt entlang der Schnittlinie VIII-VIII aus Fig. 6,
- Fig. 9: eine Prinzipdarstellung einer Verwendung der Lichtfeldkamera zur Prüfung einer auf eine Zigarettenpackung aufgelegten Banderole, in Schrägansicht,
- Fig. 10: die Zigarettenpackung mit aufgelegter Banderole aus Fig. 9 sowie eine weitere Zigarettenpackung mit fehlerhaft geöffnetem Deckel in einem 3D-Koordinatensystem,
- Fig. 11: eine Prinzipdarstellung einer Verwendung der Lichtfeldkamera zur Prüfung eines Packungszuschnitts einer Zigarettenpackung sowie der Faltung desselben im Bereich eines Faltrevolvers, in Schrägansicht,
- Fig. 12: einen ungefalteten Zuschnitt einer Zigarettenpackung in einem 3D-Koordinatensystem,
- Fig. 13: eine Hohlfilterzigarettengruppe in einem 3D-Koordinatensystem,
- Fig. 14: eine Prinzipdarstellung einer Verwendung der Lichtfeldkamera zur Prüfung von durch Prägewalzen in eine Stanniolbahn eingebrachten Prägebereichen, in Seitenansicht,
- Fig. 15: eine Prinzipdarstellung in unterschiedlicher Qualität geprägter Bereiche der Stanniolbahn, in Draufsicht,
- Fig. 16: die Darstellung einer Prüfung der Gruppe von Hohlzylinderzigaretten mit einer Lichtfeldkamera, in Seitenansicht,
- Fig. 17: eine Gruppe von Hohlfilterzigaretten in Schrägansicht mit einer einzelnen, fehlerhafterweise hervorstehenden Hohlfilterzigarette,
- Fig. 18: die Darstellung der Hohlfilter-Zigarettengruppe aus Fig. 17 aus Sicht der diese prüfenden Lichtfeldkamera (Vorderansicht) mit einer Fokussierung auf die Stirnseiten der nicht hervorstehenden Zigaretten,
- Fig. 19: eine Darstellung entsprechend Fig. 18 mit einer Fokussierung auf die hervorstehende Zigarette,
- Fig. 20: ein aus den Bildern gemäß Fig. 18 und Fig. 19 zusammengesetztes Bild der Zigarettengruppe.

In den nachfolgenden Beispielen werden verschiedene Aspekte des erfindungsgemäßen Prüfverfahrens anhand von Prüfungen gezeigt, wie sie im Rahmen der Verpackung von Zigaretten (während des Produktionsprozesses) anfallen können. Die Fertigung der Zigarettenpackungen bzw. die Verpackung der Zigaretten erfolgt dabei durch eine an sich bekannte Verpackungsanlage für Zigaretten bzw. durch jeweils entsprechende Fertigungseinheiten/-maschinen einer solchen Verpackungsanlage. Auf die Einzelheiten derselben muss daher nicht näher eingegangen werden.

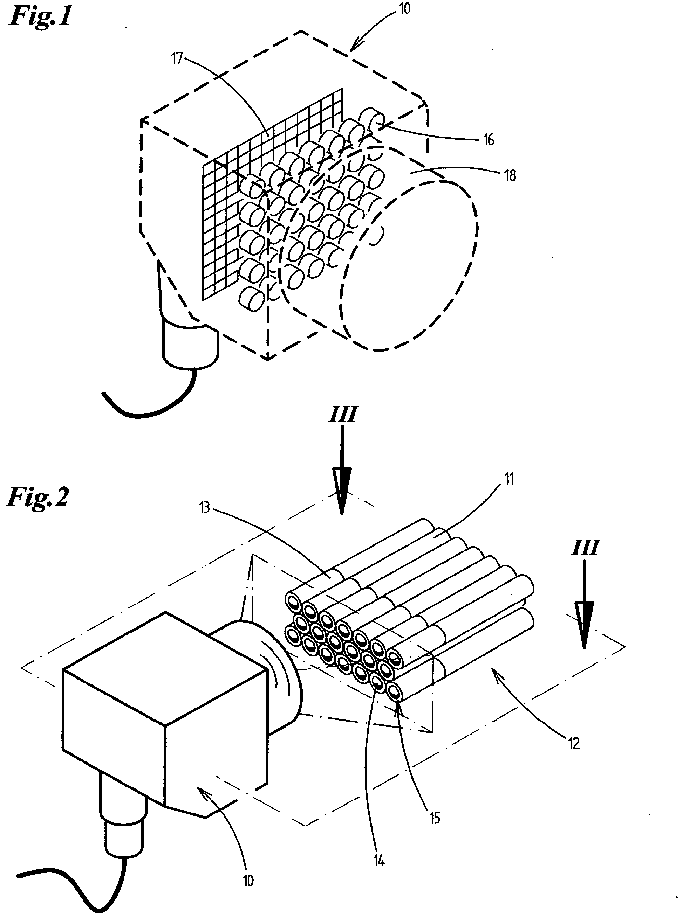

Unter anderem in den Fig. 2, 13, 16 - 20 wird die Verwendung einer Lichtfeldkamera 10 im Rahmen der Prüfung einer (nach Fertigstellung der Zigarettenpackung den Inhalt derselben bildenden) Zigarettengruppe 12 aus mehreren Lagen von einzelnen Zigaretten 11 gezeigt, wie sie im Laufe des Produktionsprozesses als Zwischenprodukt gebildet wird.

Die Lichtfeldkamera 10 ist dabei Teil einer Prüfeinrichtung, die bevorzugt auch über eine entsprechende Recheneinheit bzw. eine Computereinrichtung verfügt, wie etwa einen PC oder dergleichen, sowie über geeignete Software, mit der die im Rahmen dieser Anmeldung beschriebenen Prüfverfahren bzw. die Bildinformationsverarbeitung durchgeführt werden können. Insbesondere die Verarbeitung und Auswertung der durch die Lichtfeldkamera 10 erzeugten Bildinformationen. Die Recheneinheit kann im Übrigen auch Teil der Lichtfeldkamera 10 sein.

Bei den Zigaretten 11 handelt es sich um Hohlfilterzigaretten mit entsprechendem Hohlfilter 13 mit unter Bildung einer Stirnseitenöffnung 14 bis zur Stirnseite 15 reichendem, zylindrischen Hohlraum. Es können natürlich auch Gruppen aus anderen Zigaretten geprüft werden.

Bei der verwendeten Lichtfeldkamera 10 handelt es sich um eine an sich bekannte Lichtfeldkamera bzw. plenoptische Kamera, die als Bild (im Rahmen der Anmeldung auch als "Lichtfeld-Bild" bezeichnet) ein ganzes Lichtfeld eines Objektes erfassen kann. In dem technischen Gebiet der Lichtfeldkameras wird in diesem Zusammenhang oft von einem 4-D-Lichtfeld gesprochen, da nicht nur die Position und Intensität eines Lichtstrahls erfasst wird, sondern auch die Richtung, aus der der Lichtstrahl einfällt.

Zu diesem Zweck weist die Lichtfeldkamera 10 ein Array bzw. Gitter aus Mikrolinsen 16 auf, das vor einem Bildsensor 17 angeordnet ist. Vor dem Gitter aus Mikrolinsen 16 ist ein Objektiv 18 angeordnet, dass vor der Ebene der Mikrolinsen 16 ein verkleinertes Zwischenbild 19 des von der Lichtfeldkamera 10 erfassten Objektes 20 bzw. des Hauptbildes erzeugt. Jede Mikrolinse 16 bildet das Zwischenbild 19 dann auf einem ihr zugordneten Bereich des Bildsensors 17 ab.

Die Lichtfeldkamera 10 nimmt Bilder auf und erzeugt dabei Rohbilddaten, die auch Tiefeninformationen über das erfasste Objekt umfassen, sodass nicht nur X-Y Koordinaten eines zu erfassenden Objektes umfasst sind, sondern auch Z-Koordinaten. Also zusätzlich zu Grauwerten oder Farbwerten, die X-Y-Koordinaten einer X-Y-Ebene zugeordnet sind, auch Informationen zur Z-Ebene.

Insbesondere lässt sich aus den Rohbilddaten der Lichtfeldkamera 10 mittels geeigneter, dem Fachmann bekannter Algorithmen ein Tiefenbild gewinnen, dass dann erfindungsgemäß in besonderer Weise verwendet und ausgewertet wird, worauf nachfolgend noch näher eingegangen wird.

Mit der Lichtfeldkamera 10 kann des Weiteren im Rahmen der späteren Informationsverarbeitung auch die Fokusebene eines bereits aufgenommenen (Lichtfeld-)Bildes nachträglich verändert werden.

Weitere Details werden zunächst anhand der Verwendung der Lichtfeldkamera 10 im Rahmen der optischen Prüfung der Zigarettengruppe 12 näher erläutert. Dabei ist die Blickrichtung der Lichtfeldkamera 10 bevorzugt senkrecht auf die Ebene der Stirnseiten 15 der Zigarettengruppe 12 gerichtet. Gegebenenfalls wird ein halbdurchlässiger Spiegel 22 verwendet, um gleichzeitig eine ebenfalls senkrechte Bestrahlung der Stirnseiten 15 der Zigarettengruppe 12 mit Licht einer eine Lichtquelle umfassenden Beleuchtungseinrichtung 23 zu ermöglichen. Zudem kann zwischen Beleuchtungseinrichtung 23 und Zigarettengruppe 12 ein Rauschfilter 21 angeordnet werden, der unterstützt, dass insbesondere (zu) helle Flächen der Zigarettengruppe 12, insbesondere die Stirnseiten 15, in dem später auszuwertenden Bild gut sichtbar sind.

Die Zigarettengruppe 12 kann mit der Lichtfeldkamera 10 auf unterschiedlichste Fehler geprüft werden. Beispielsweise kann im Hinblick auf das Fehlen einer Zigarette 11 in der Gruppe geprüft werden. Weiter kann Tabakausfall an den Zigarettenköpfen entdeckt werden. Auch können Konturfehler ermittelt werden.

Im Rahmen des erfindungsgemäßen Prüfverfahrens wird zunächst durch die Recheneinheit der Prüfeinrichtung aus den Rohbilddaten ein Tiefenbild der Stirnseiten 15 der Zigarettengruppe 12 erzeugt. In diesem Tiefenbild sind X-Y-Koordinaten Tiefeninformationen zugeordnet, nämlich vorliegend Abstandswerte. Diese Abstandswerte repräsentieren Entfernungen der von der Lichtfeldkamera 10 erfassten Objekte von der Lichtfeldkamera 10 bzw. insbesondere von dem Bildsensor 17.

Aus dem von der Gruppe 12 aufgenommenem Tiefenbild können unter anderem die Abstände der Stirnseiten 15 der einzelnen Zigaretten 11 der Zigarettengruppe 12 von der Kamera 10 ermittelt werden. Von der Prüfeinrichtung können dann beispielsweise bestimmte in dem Tiefenbild enthaltene Abstandwerte als "fehlerhaft" und bestimmte Abstandswerte als "nicht fehlerhaft" bewertet werden. Es versteht sich, dass es verschiedenste Möglichkeiten der Bewertung der Informationen des Tiefenbildes gibt. Gleiches gilt für die Maßnahmen, die aufgrund der Bewertung ggf. ergriffen werden.

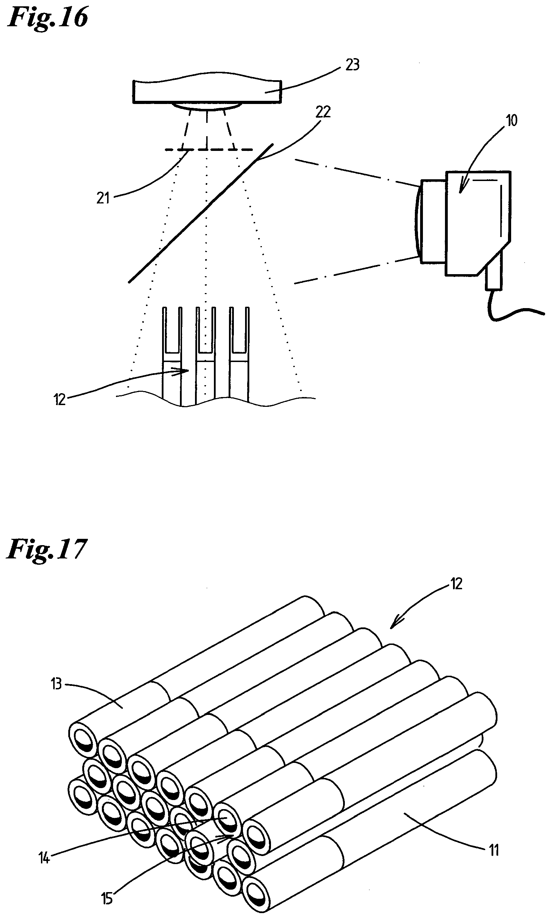

Wenn beispielsweise eine Zigarette 11.1, vgl. Fig. 17, mit ihrer Stirnseite 15 aus der Gruppe 12 hervorragt, würde dem entsprechenden Tiefenbild bei den X-Y-Koordinaten, die der Position dieser Zigarette 11.1 entspricht, ein zugeordneter Abstandswert entnommen werden können. Es könnte vorgesehen sein, dass er, falls er außerhalb eines vordefinierten Werteintervalls liegt, als " fehlerhaft" bewertet wird.

Denkbar ist auch, dass ein Grenzwert vorgegeben ist, ab dessen Erreichen ein Abstandswert als "fehlerhaft" bewertet wird.

Wenn eine Zigarette 11 als fehlerhaft bewertet wird, kann im Weiteren beispielsweise von der Prüfeinrichtung ein Fehlersignal erzeugt werden. Dieses Fehlersignal kann einer oder der Steuereinrichtung der Verpackungsanlage oder einer entsprechenden Fertigungseinheit zugeführt werden, woraufhin diese das Ausschleusen der Gruppe 12 aus dem Produktionsprozess veranlasst.

Aus den Informationen des Tiefenbildes kann weiter abgeleitet werden, ob an einer Position der Zigarettengruppe 12 eine Zigarette 11 fehlt. In diesem Fall könnte in dem entsprechenden X-Y-Koordinatenbereich, der der Position der betreffenden Zigarette entspricht, beispielsweise ein Abstandwert "unendlich" oder ein anderer Abstandswert zugeordnet sein, der auf das Fehlen der Zigarette 11 hindeutet.

Mit Hilfe der von der Lichtfeldkamera 10 erzeugten Daten kann die Zigarettengruppe 12 unter Verwendung der Tiefeninformationen auch besonders vorteilhaft im Hinblick auf Qualität geprüft werden.

Denn die Tiefeninformationen können benutzt werden, um ein 2D-Auswertebild der Gruppe 12 besonderer Qualität, insbesondere besonderer Schärfentiefe zu gewinnen. Dies beispielsweise auch für den Fall, dass das Hervorstehen einzelner Zigaretten 11 noch als zulässig bewertet wird, sodass die Gruppe 12 nicht ausgeschleust wird. Insbesondere, aber nicht nur in einem solchen Fall können zunächst mit Hilfe der Tiefeninformationen bzw. aus dem Tiefenbild die Abstandswerte der Stirnseiten 15 der einzelnen Zigaretten 11 von der Lichtfeldkamera 10 bestimmt werden.

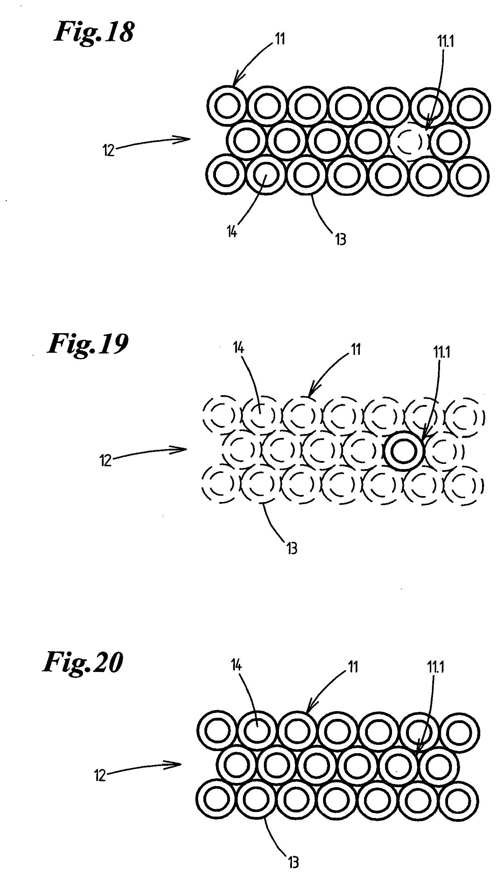

Für jeden Abstandswert, d.h. für jede Tiefenebene, in der eine Zigarettenstirnseite 15 angeordnet ist, kann dann ein 2D-Bild aus den Rohbilddaten erzeugt werden, bei dem jeweils die Bildinformationen einen Grauwert oder eine Farbinformation umfassen. In Fig. 18 ist beispielhaft ein entsprechendes 2D-Bild der Gruppe 12 gezeigt, das für diejenige Tiefenebene erzeugt wurde, in der die Stirnseiten 15 der nicht hervorstehenden Zigaretten 11 der Gruppe 12 angeordnet sind. Die Qualität der Abbildung der hervorstehenden Zigarette 11.1 ist erkennbar schlechter als die der anderen Zigaretten 11 der Gruppe 12.

In Fig. 19 ist ein entsprechendes 2D-Bild der Gruppe 12 gezeigt, das für die Tiefenebene erzeugt wurde, in der die Stirnseite 15 der hervorstehenden Zigarette 11.1 der Gruppe 12 angeordnet ist. Die Qualität der Abbildung der hervorstehenden Zigarette 11.1 ist besser als die der anderen Zigaretten 11 der Gruppe 12.

Die auf diese Weise gewonnenen 2D-Bilder können dann zu dem 2D-Auswertebild kombiniert werden, vgl. Fig. 19, in dem alle Stirnseiten 15 sämtlicher Zigaretten 11 mit guter Qualität bzw. hoher Schärfe zu erkennen sind.

Das 2D-Auswertebild aus Fig. 19 kann dann mit bekannten Bildauswertealgorithmen auf Fehler der Qualität der Zigaretten 11 der Zigarettengruppe 12 untersucht werden, insbesondere auf Tabakfehler oder auf Fehler der Kontur der Stirnseiten 15 der Zigaretten 11 etc.

Das erfindungsgemäße Verfahren kann für verschiedene weitere optische Prüfungen von im Rahmen der Herstellung und Verpackung von Zigaretten oder anderen rauchbaren Artikeln eingesetzt werden. Auf einige besonders vorteilhafte Anwendungen wird nachfolgend noch kurz näher eingegangen.

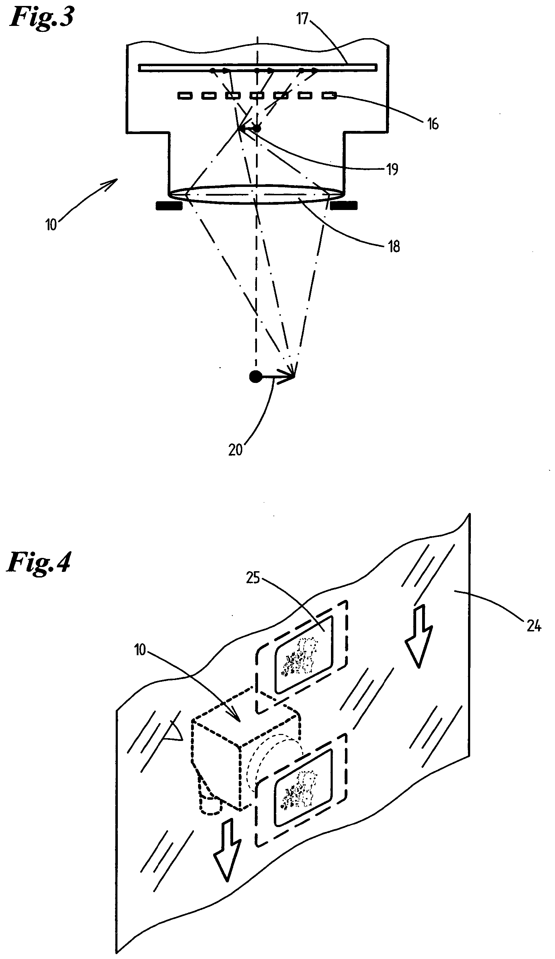

Es kann vorgesehen sein, dass die Lichtfeldkamera 10 ein (Lichtfeld-)Bild eines auf einer Materialbahn 24 mittels Leim 31 befestigtem, auf diesem aufliegenden Etiketts 25 aufnimmt, vgl. Fig. 4 - 8. Bei der Materialbahn 24 kann es sich um eine Folienbahn handeln, mit der beispielsweise fertiggestellte Zigarettenpackungen umwickelt werden. Die Materialbahn 24 kann dabei im Produktionsprozess entlang der Lichtfeldkamera 10 gefördert werden, die entweder im Stillstand der Materialbahn oder wenn diese in Bewegung ist das (Lichtfeld-)Bild aufnimmt. Die Blickrichtung der Lichtfeldkamera 10 ist dabei vorteilhafterweise senkrecht zur Folienbahnförderebene auf eine der beiden Seiten derselben gerichtet.

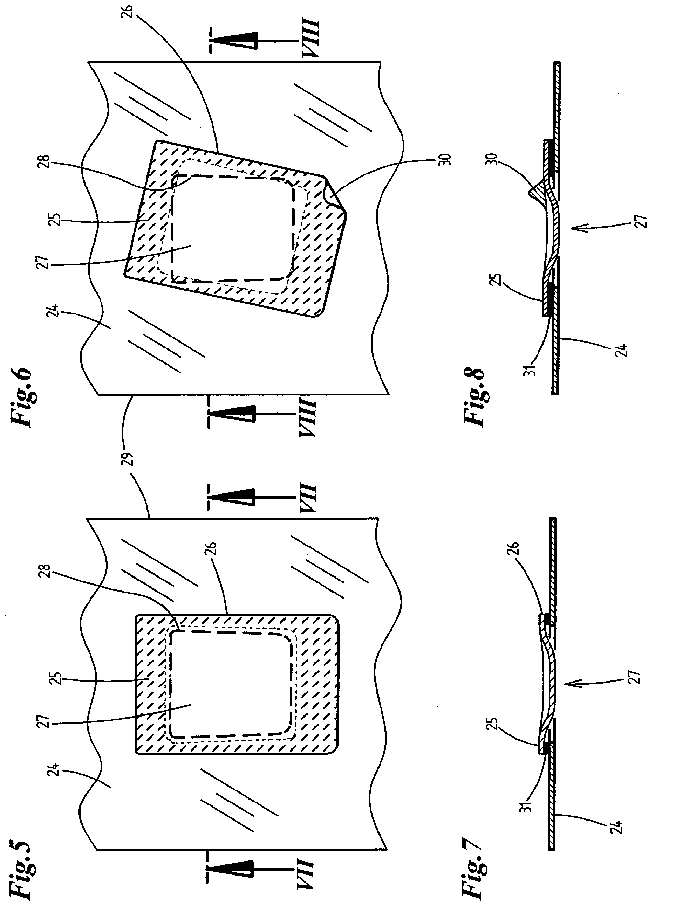

Unter Verwendung der Tiefeninformationen des (Lichtfeld-)Bildes kann dann mittels der Prüfeinrichtung beispielsweise die räumliche Lage mindestens einer Außenkante 26 des Etiketts 25 relativ zu der Materialbahn 24 ermittelt werden und geprüft werden, ob diese Lage einer vorgegebenen Bedingung entspricht. Insbesondere könnte auf diese Weise beispielsweise eine fehlerhafte Schief- oder Schräglage des Etiketts 25 erkannt werden, vgl. Fig. 6. Beispielsweise könnte die Lage der Außenkante 26 relativ zu einer (Außen-)Kante 28 einer (ebenfalls durch das aufgenommene (Lichtfeld-)Bild der Lichtfeldkamera 10 erfassten) durch das Etikett 25 bedeckten Ausstanzung 27 bzw. Freimachung der Materialbahn 24 ermittelt werden oder relativ zu einer der Längsaußenkanten 29 der Materialbahn 24. Wenn die Etikettkante 26 und die Ausstanzungskante 28 oder die Materialbahnaußenkante 29 beispielsweise nicht parallel verlaufen, könnte die Prüfeinrichtung dann ein Fehlersignal erzeugen.

Weiter könnte auch unter Verwendung der Tiefeninformationen das fehlerhafte Hochstehen eines Bereichs des Etiketts 25, beispielsweise eines Eckbereichs 30, besonders gut erkannt werden.

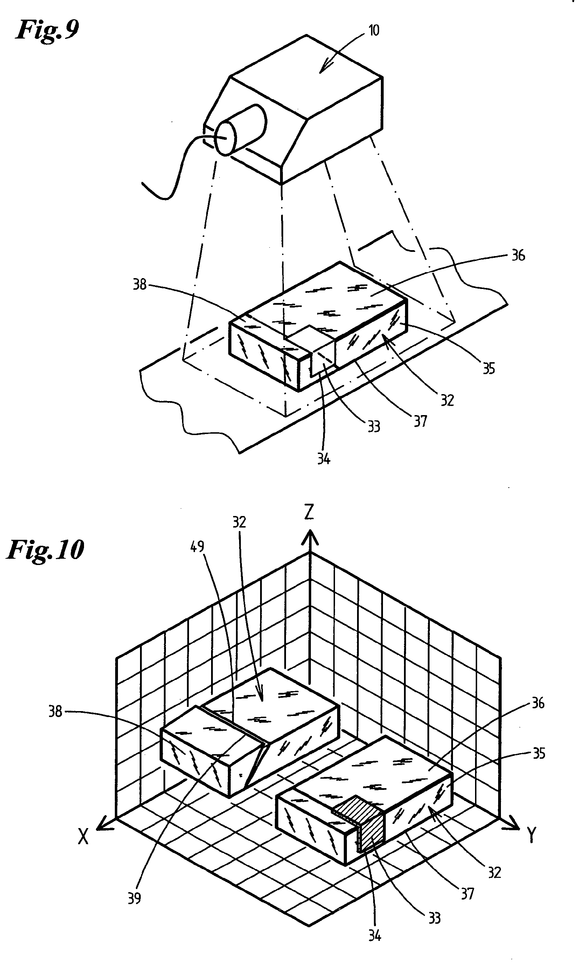

In einer weiteren Ausführungsform der Erfindung ist vorgesehen, dass die Lichtfeldkamera 10 ein (Lichtfeld-)Bild einer auf einer ganz oder teilweise fertiggestellten Zigarettenpackung 32 aufliegenden Banderole 33 aufnimmt, vgl. Fig. 9 und 10. Unter Verwendung der Tiefeninformationen kann die Prüfeinrichtung dann die räumliche Lage mindestens einer Außenkante 34 der Banderole 33 relativ zu der oder den Packungsseiten 35, 36 ermitteln, auf der die Banderole 33 aufliegt und prüfen, ob diese Lage einer vorgegebenen Bedingung entspricht. Beispielsweise könnte geprüft werden, ob die Außenkante 34 der Banderole 33 parallel zu einer bestimmten Packungskante verläuft, etwa der Packungskante 37. Hier gibt es diverse Möglichkeiten. Weiter könnte mit der Lichtfeldkamera 10 die gesamte Zigarettenpackung 32 auf etwaige Fehler untersucht werden, bspw. auf Faltungsfehler, Fehler etwaiger Aufdrucke, Materialfehler etc.

Insbesondere könnte mit der Lichtfeldkamera 10 ein (Lichtfeld-)Bild der Zigarettenpackung im Bereich ihres Deckels 38 aufgenommen und die Prüfeinrichtung unter Verwendung der Tiefeninformationen prüfen, ob gegebenenfalls der Deckel 38 ungewollt bzw. fehlerhaft geöffnet ist, vgl. Fig. 10. Insbesondere, indem sie die räumliche Lage einer an den Öffnungsbereich angrenzenden Deckelkante 39 erfasst. Dabei kann sie auch beispielsweise prüfen, ob zwischen Deckelkante 39 sowie angrenzender Schließkante 49 der Packung 32 ein fehlerhaft großer Abstand besteht, der auf eine fehlerhafte Öffnung hindeutet.

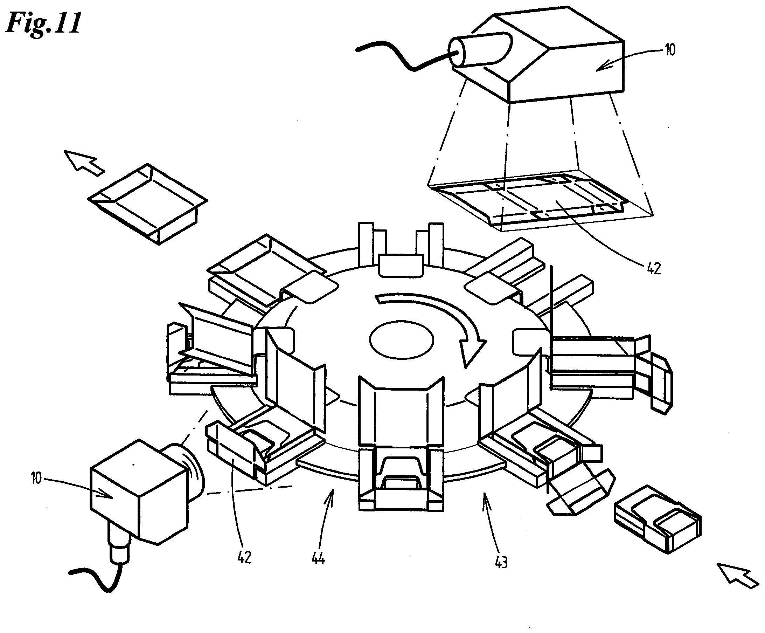

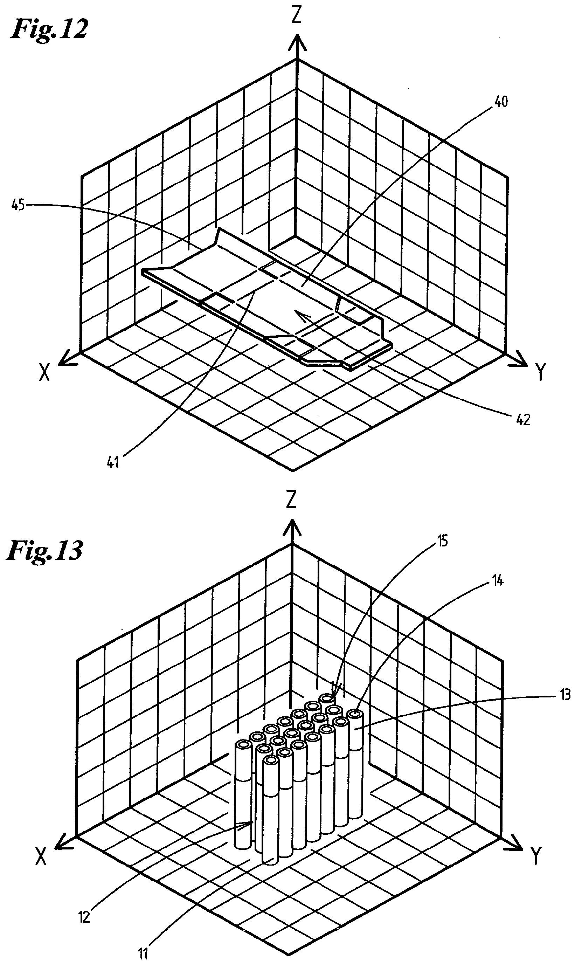

In einer weiteren vorteilhaften Ausführungsform der Erfindung ist vorgesehen, dass mit der Lichtfeldkamera 10 ein (Lichtfeld-)Bild eines Faltlappens 40 sowie Faltrillen 41 aufweisenden Packungszuschnitts 42 für eine Zigarettenpackung aufgenommen wird. Diese Aufnahme kann an einem ungefalteten Zuschnitt 42 vorgenommen werden oder an einem bereits teilweise gefalteten Zuschnitt 42, vgl. Fig. 11, 12. Die Lichtfeldkamera 10 kann zu diesem Zweck im Bereich einer insbesondere einen Faltrevolver 44 aufweisenden Faltstation 43 zur Faltung des Zuschnitts 42 der Verpackungsanlage angeordnet sein.

Unter Verwendung der Tiefeninformationen des (Lichtfeld-)Bildes kann die Prüfeinrichtung dann beispielsweise die Größe oder die Form des Zuschnitts 42 oder der Faltrillen 41 des Zuschnitts 42 prüfen oder die Größe, Form oder Lage der Faltlappen 40 des Zuschnitts 42. Bei Abweichungen von vorgegebenen Bedingungen würde wiederum ein Fehlersignal erzeugt werden.

Insbesondere kann in diesem Zusammenhang die räumliche Lage einer Faltrille 41 des Zuschnitts 42 relativ zu einer Außenkante 45 des Zuschnitts 42 oder relativ zu einer auf dem Zuschnitt 42 angeordneten Markierung, insbesondere einer Druckmarke, geprüft werden. Bevorzugt kann auch in diesem Zusammenhang geprüft werden, ob die Faltrille 41 beispielsweise parallel zur Außenkante 45 verläuft.

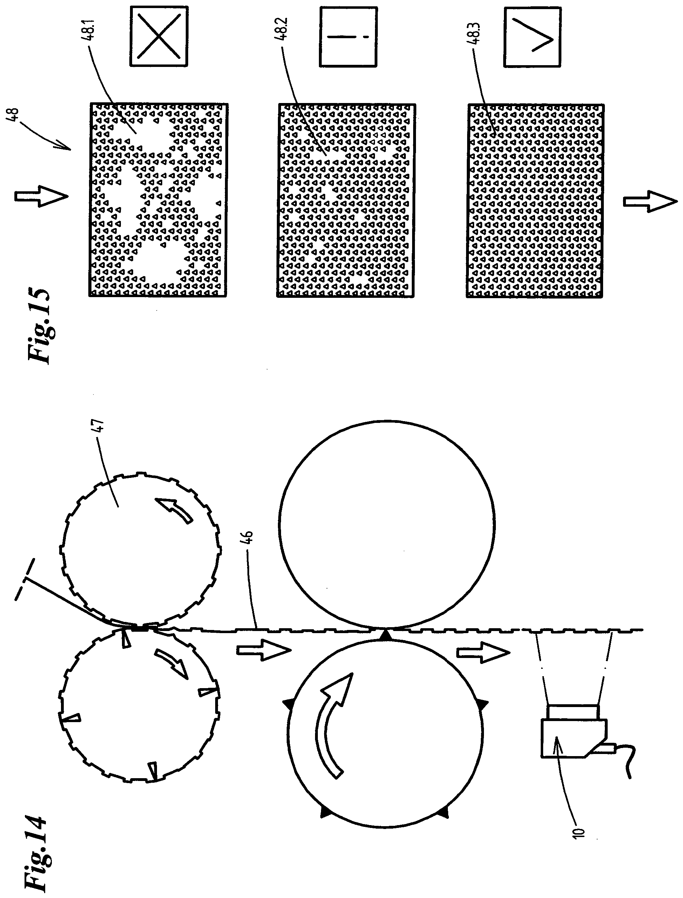

In einer weiteren vorteilhaften Ausführungsform der Erfindung ist vorgesehen, mit der Lichtfeldkamera 10 ein (Lichtfeld-)Bild mindestens eines Bereichs einer Materialbahn 46, wie einer Stanniolbahn, zur Herstellung einer Zigarettenpackung aufzunehmen, in der durch ein oder mehrere Prägewalzen 47 Prägungen 48 eingebracht sind oder eingebracht sein sollten, vgl. Fig. 14 und 15. Unter Verwendung der Tiefeninformationen prüft die Prüfeinrichtung dann, ob sämtliche erwarteten Prägungen eingebracht sind oder ob die Größe oder Form der eingebrachten Prägungen 48 oder deren Lage relativ zu dem Zuschnitt oder der Materialbahn fehlerfrei ist.

Zu diesem Zweck würde die Lichtfeldkamera 10 stromab der Prägewalzen 47 mit (senkrechter) Blickrichtung auf die Materialbahn 46 angeordnet werden. Nicht oder schlecht geprägte Bereiche 48.1, 48.2 lassen sich dabei von gut geprägten Bereichen 48.3 mithilfe der Tiefeninformationen in einfacher Weise unterscheiden.

**Bezugszeichenliste:**

| | | | |
|---|---|---|---|
| 10 | Lichtfeldkamera | 35 | Packungsseite |
| 11 | Zigaretten | 36 | Packungsseite |
| 11.1 | Hervorstehende Zigarette | 37 | Packungskante |
| 12 | Zigarettengruppe | 38 | Deckel Zigarettenpackung |
| 13 | Filter | 39 | Deckelkante |
| 14 | Öffnung | 40 | Faltlappen |
| 15 | Stirnseite | 41 | Faltrillen |
| 16 | Mikrolinsen | 42 | Packungszuschnitt |
| 17 | Bildsensor | 43 | Faltstation |
| 18 | Objektiv | 44 | Faltrevolver |
| 19 | Zwischenbild | 45 | Außenkante Zuschnitt |
| 20 | Hauptbild | 46 | Materialbahn |
| 21 | Rauschfilter | 47 | Prägewalzen |
| 22 | Halbdurchlässiger Spiegel | 48 | Prägungen |
| 23 | Beleuchtungseinrichtung | 48.1 | Prägung fehlerhaft |
| 24 | Materialbahn | 48.2 | Prägung fehlerhaft |
| 25 | Etikett | 48.3 | Prägung gut |
| 26 | Außenkante Etikett | 49 | Schließkante |
| 27 | Ausstanzung | | |
| 28 | Außenkante Ausstanzung | | |
| 29 | Außenkante Materialbahn | | |
| 30 | Eckbereich Etikett | | |
| 31 | Leim | | |
| 32 | Zigarettenpackung | | |
| 33 | Banderole | | |
| 34 | Außenkante Banderole | | |

## Patentansprüche

1. Verfahren zur Prüfung von bei der Herstellung oder Verpackung von Zigaretten (11) oder anderen rauchbaren Produkten zu prüfenden Objekten - Prüfobjekte - während des Produktionsprozesses, bei dem wenigstens ein Prüfobjekt einer optischen Prüfung unterzogen wird, wobei mittels einer Lichtfeldkamera (10) ein Lichtfeldbild des mindestens einen Prüfobjekts aufgenommen wird, wobei dabei das Bild repräsentierende Rohbilddaten erzeugt werden, und wobei aus den Rohbilddaten Tiefeninformationen gewonnen werden, die verwendet werden, um zu prüfen, ob das mindestens eine Prüfobjekt fehlerhaft ist, **dadurch gekennzeichnet,**
• **dass** aus den Rohbilddaten ein die Tiefeninformationen umfassendes Tiefenbild erzeugt wird, bei dem X-Y-Koordinaten einer zur Kamerablickrichtung senkrechten Ebene Werte zugeordnet sind, die Abstände von von der Lichtfeldkamera (10) erfassten Objekten, insbesondere des mindestens einen Prüfobjekts, von der Kamera repräsentieren - Abstandswerte -,
• **dass** aus dem Tiefenbild Abstandswerte des mindestens einen Prüfobjekts ermittelt werden, insbesondere Abstandswerte jeder Stirnseite (15) der Zigaretten (11) der Zigarettengruppe (12),
• **dass** aus den Rohbilddaten für mehrere oder jeden ermittelten Abstandswert ein 2D-Bild aus den in den Rohbilddaten dem jeweiligen Abstandswert zugeordneten Bildinformationen erzeugt wird, wobei die Bildinformationen jeweils einen Grauwert oder einen Farbwert umfassen können,
• und **dass** die auf diese Weise erzeugten 2D-Bilder zu einem kombinierten 2D-Auswertebild zusammengesetzt werden.

2. Verfahren gemäß Anspruch 1, **dadurch gekennzeichnet, dass** die Lichtfeldkamera ein Lichtfeldbild der Stirnseiten (15) von Zigaretten (11) einer Zigarettengruppe (12) aufnimmt, wobei die Abstandswerte die Abstände der einzelnen Stirnseiten (15) von der Lichtfeldkamera (10) repräsentieren.

3. Verfahren gemäß Anspruch 1 oder 2, **dadurch gekennzeichnet, dass** ein Fehlersignal erzeugt wird für den Fall, dass ein oder mehrere Abstandswerte eine vorbestimmte Bedingung nicht erfüllen, insbesondere einen vorbestimmten Grenzwert erreichen oder überschreiten oder sich nicht innerhalb eines vorbestimmten Werteintervalls befinden.

4. Verfahren gemäß Anspruch 2 oder 3, **dadurch gekennzeichnet, dass** ein Fehlersignal erzeugt wird für den Fall, dass das Tiefenbild bei X-Y-Koordinaten keine Abstandswerte aufweist, bei denen erwartet wird, dass diesen auf das Vorhandensein einer Zigarettenstirnseite hindeutende Abstandswerte zugeordnet sind.

5. Verfahren gemäß Anspruch 4, **dadurch gekennzeichnet, dass** das 2D-Auswertebild auf Fehler untersucht wird, insbesondere auf Fehler der Zigaretten (11) der Zigarettengruppe (12), wie etwa auf Tabakfehler oder auf Fehler der Kontur der Stirnseiten der Zigaretten.

6. Verfahren gemäß einem oder mehreren der vorhergehenden Ansprüche, **dadurch gekennzeichnet, dass** die Lichtfeldkamera (10) ein Lichtfeldbild eines auf einer Materialbahn (24) aufliegenden Etiketts (25) aufnimmt, dass unter Verwendung der Tiefeninformationen die räumliche Lage mindestens einer Außenkante (26) des Etiketts (25) relativ zu der Materialbahn (24) ermittelt wird, und dass geprüft wird, ob diese Lage einer vorgegebenen Bedingung entspricht.

7. Verfahren gemäß Anspruch 6, **dadurch gekennzeichnet, dass** die Lage der Etikettkante (26) relativ zu einer Kante (28) einer durch das Etikett (25) bedeckten Freimachung oder Ausstanzung in der Materialbahn (24) ermittelt wird oder relativ zu einer Längsaußenkante (29) der Materialbahn.

8. Verfahren gemäß Anspruch 7, **dadurch gekennzeichnet, dass** die räumliche Lage der Freimachungs- oder Ausstanzungsaußenkante (28) oder der Längsaußenkante (29) ebenfalls unter Verwendung der Tiefeninformationen ermittelt wird.

9. Verfahren gemäß einem oder mehreren der vorhergehenden Ansprüche, **dadurch gekennzeichnet, dass** mit der Lichtfeldkamera (10) ein Lichtfeldbild einer auf einer ganz oder teilweise fertiggestellten Zigarettenpackung (32) aufliegenden Banderole (33) erfasst wird, dass unter Verwendung der Tiefeninformationen die räumliche Lage mindestens einer Außenkante (34) der Banderole (33) relativ zu mindestens einer Packungsseite ermittelt wird, auf der die Banderole (33) aufliegt, und dass geprüft wird, ob diese Lage einer vorgegebenen Bedingung entspricht.

10. Verfahren gemäß einem oder mehreren der vorhergehenden Ansprüche, **dadurch gekennzeichnet, dass** mit der Lichtfeldkamera (10) ein Lichtfeldbild einer Zigarettenpackung (32) im Bereich ihres Deckels (38) aufgenommen wird, und dass unter Verwendung der Tiefeninformationen geprüft wird, ob gegebenenfalls der Deckel (38) fehlerhafterweise geöffnet ist, insbesondere, indem die räumliche Lage mindestens einer Deckelkante (39) erfasst wird.

11. Verfahren gemäß einem oder mehreren der vorhergehenden Ansprüche, **dadurch gekennzeichnet, dass** mit der Lichtfeldkamera (10) ein Lichtfeldbild eines mindestens einen Faltlappens (40) sowie mindestens eine Faltrille (41) aufweisenden Zuschnitts (42) für eine Zigarettenpackung (32) aufgenommen wird, insbesondere im Bereich einer den mindestens einen Faltlappen (40) des Zuschnittes (42) entlang der mindestens einen Faltrille (41) faltenden Faltstation (43), und dass im Rahmen der Auswertung unter Verwendung der Tiefeninformationen die Größe oder die Form des Zuschnitts (42) oder mindestens einer Faltrille (41) des Zuschnitts (42) geprüft wird oder die Größe, Form oder Lage mindestens eines Faltlappens (40) des Zuschnitts (42).

12. Verfahren gemäß Anspruch 11, **dadurch gekennzeichnet, dass** im Rahmen der Auswertung unter Verwendung der Tiefeninformationen die räumliche Lage mindestens einer Faltrille (41) des Zuschnitts (42) relativ zu mindestens einer Außenkante (45) des Zuschnitts (42) oder relativ zu einer auf dem Zuschnitt (42) angeordneten Markierung, insbesondere einer Druckmarke, ermittelt wird.

13. Verfahren gemäß einem oder mehreren der vorhergehenden Ansprüche, **dadurch gekennzeichnet, dass** mit der Lichtfeldkamera (10) ein Lichtfeldbild mindestens eines Bereichs eines Zuschnitts oder einer Materialbahn (46) zur Herstellung einer Zigarettenpackung aufgenommen wird, in dem in der durch eine Prägewalze (47) Prägungen eingebracht sind oder eingebracht sein sollten, und dass unter Verwendung der Tiefeninformationen geprüft wird, ob sämtliche erwarteten Prägungen (48) eingebracht sind oder ob die Größe oder Form der Prägungen (48) oder deren Lage relativ zu dem Zuschnitt oder der Materialbahn (46) fehlerhaft ist.

14. Verfahren gemäß einem oder mehreren der vorhergehenden Ansprüche, **dadurch gekennzeichnet, dass** mit der Lichtfeldkamera (10) ein Lichtfeldbild eines Bereichs eines Zuschnitts oder einer Materialbahn zur Herstellung einer Zigarettenpackung aufgenommen wird, in dem Leimstellen aufgebracht sind oder aufgebracht sein sollten, und dass im Rahmen der Auswertung unter Verwendung der Tiefeninformationen geprüft wird, ob sämtliche erwarteten Leimstellen aufgebracht sind oder ob die Größe oder Form der Leimstellen oder deren Lage relativ zu dem Zuschnitt oder der Materialbahn fehlerfrei ist.

## Claims

1. Method for testing objects to be tested during the production or packaging of cigarettes (11) or other smokable products - test objects - during the production process, in which at least one test object is subjected to an optical test, wherein a light-field image of the at least one test object is taken by means of a light-field camera (10), wherein raw image data representing the image is generated in the process, and wherein pieces of depth information are obtained from the raw image data and are used to test whether the at least one test object is defective, **characterized**
• **in that** a depth image comprising the pieces of depth information is generated from the raw image data, in which depth image X-Y coordinates of a plane perpendicular to the camera viewing direction are assigned values which represent distances of objects captured by the light-field camera (10), in particular of the at least one test object, from the camera - distance values,
• **in that** distance values of the at least one test object, in particular distance values of each end face (15) of the cigarettes (11) of the cigarette group (12), are ascertained from the depth image,
• **in that**, for multiple or each ascertained distance value, a 2D image is generated from the raw image data from the pieces of image information assigned to the respective distance value in the raw image data, wherein the pieces of image information may in each case comprise a greyscale value or a colour value,
• and **in that** the 2D images generated in this way are put together to form a combined 2D evaluation image.

2. Method according to Claim 1, **characterized in that** the light-field camera takes a light-field image of the end faces (15) of cigarettes (11) of a cigarette group (12), wherein the distance values represent the distances of the individual end faces (15) from the light-field camera (10).

3. Method according to Claim 1 or 2, **characterized in that** a defect signal is generated in the case where one or more distance values do not satisfy a predetermined condition, in particular reach or exceed a predetermined limit value are not within a predetermined value interval.

4. Method according to Claim 2 or 3, **characterized in that** a defect signal is generated in the case where the depth image has no distance values at X-Y coordinates for which assignment thereto of distance values indicating the presence of a cigarette end face is expected.

5. Method according to Claim 4, **characterized in that** the 2D evaluation image is examined for defects, in particular for defects of the cigarettes (11) of the cigarette group (12), such as for example for tobacco defects or for defects of the contour of the end faces of the cigarettes.

6. Method according to one or more of the preceding claims, **characterized in that** the light-field camera (10) takes a light-field image of a label (25) which lies on a material web (24), **in that** the spatial position of at least one outer edge (26) of the label (25) relative to the material web (24) is ascertained using the depth information, and **in that** it is tested whether this position corresponds to a predefined condition.

7. Method according to Claim 6, **characterized in that** the position of the label edge (26) relative to an edge (28) of a cutout or punched-out portion, covered by the label (25), in the material web (24) or relative to a longitudinal outer edge (29) of the material web is ascertained.

8. Method according to Claim 7, **characterized in that** the spatial position of the cutout or punched-out portion outer edge (28) or of the longitudinal outer edge (29) is likewise ascertained using the pieces of depth information.

9. Method according to one or more of the preceding claims, **characterized in that** a light-field image of a revenue stamp (33) lying on a completely or partly finished cigarette pack (32) is recorded by the light-field camera (10), **in that** the spatial position of at least one outer edge (34) of the revenue stamp (33) relative to at least one pack side on which the revenue stamp (33) lies is ascertained using the pieces of depth information, and **in that** it is tested whether this position corresponds to a predefined condition.

10. Method according to one or more of the preceding claims, **characterized in that** a light-field image of a cigarette pack (32) in the region of its lid (38) is taken by the light-field camera (10), and **in that**, using the pieces of depth information, it is tested whether possibly the lid (38) is erroneously open, in particular in that the spatial position of at least one lid edge (39) is detected.

11. Method according to one or more of the preceding claims, **characterized in that** a light-field image of an at least one folding flap (40) and of a blank (42), having at least one folding groove (41), for a cigarette pack (32) is taken by the light-field camera (10), in particular in the region of a folding station (43) folding the at least one folding flap (40) of the blank (42) along the at least one folding groove (41), and **in that**, as part of the evaluation, using the pieces of depth information, the size or the shape of the blank (42) or of at least one folding groove (41) of the blank (42), or the size, shape or position of at least one folding flap (40) of the blank (42), is tested.

12. Method according to Claim 11, **characterized in that**, as part of the evaluation, using the pieces of depth information, the spatial position of at least one folding groove (41) of the blank (42) relative to at least one outer edge (45) of the blank (42) or relative to a marking, in particular a printed mark, on the blank (42) is ascertained.

13. Method according to one or more of the preceding claims, **characterized in that** a light-field image of at least one region of a blank or of a material web (46) for producing a cigarette pack in which embossments have been or were supposed to be formed by an embossing roller (47) is taken by the light-field camera (10), and **in that**, using the pieces of depth information, it is tested whether all the expected embossments (48) have been formed or whether the size or shape of the embossments (48) or the position thereof relative to the blank or to the material web (46) is erroneous.

14. Method according to one or more of the preceding claims, **characterized in that** a light-field image of a region of a blank or of a material web for producing a cigarette pack in which areas of glue have been or were supposed to be applied is taken by the light-field camera (10), and **in that**, as part of the evaluation, using the pieces of depth information, it is tested whether all the expected areas of glue have been applied or whether the size or shape of the areas of glue or the position thereof relative to the blank or to the material web (46) is correct.

## Revendications

1. Procédé de contrôle d'objets à contrôler lors de la fabrication ou de l'emballage de cigarettes (11) ou d'autres produits à fumer - objets de contrôle - pendant le processus de production, dans lequel au moins un objet de contrôle est soumis à un contrôle optique, une image de champ lumineux dudit au moins un objet de contrôle étant enregistrée au moyen d'une caméra de champ lumineux (10}, des données d'image brutes représentant l'image étant alors générées, et des informations de profondeur étant obtenues à partir des données d'image brutes, lesquelles sont utilisées pour vérifier si l'au moins un objet à contrôler est défectueux, **caractérisé**
• **en ce qu'**une image de profondeur comprenant les informations de profondeur est générée à partir des données d'image brutes, des valeurs étant associées à des coordonnées X-Y d'un plan perpendiculaire à la direction de visée de la caméra, qui représentent des distances d'objets saisis par la caméra de champ lumineux (10), en particulier de l'au moins un objet à contrôler, par rapport à la caméra - valeurs de distance -,
• **en ce que** des valeurs de distance de l'au moins un objet de contrôle sont déterminées à partir de l'image de profondeur, en particulier des valeurs de distance de chaque face frontale (15) de cigarettes (11) du groupe de cigarettes (12),
• **en ce que**, à partir des données d'image brute, pour plusieurs ou pour chaque valeur de distance déterminée, une image 2D est générée à partir des informations d'image associées dans les données d'image brute à la valeur de distance respective, les informations d'image pouvant comprendre chacune une valeur de gris ou une valeur de couleur, et
• **en ce que** les images 2D ainsi générées sont assemblées en une image d'évaluation 2D combinée.

2. Procédé selon la revendication 1, **caractérisé en ce que** la caméra de champ lumineux enregistre une image de champ lumineux des faces frontales (15) de cigarettes (11) d'un groupe de cigarettes (12), les valeurs de distance représentant les distances entre les différentes faces frontales (15) et la caméra de champ lumineux (10).

3. Procédé selon la revendication 1 ou 2, **caractérisé en ce qu'**un signal d'erreur est généré dans le cas où une ou plusieurs valeurs de distance ne remplissent pas une condition prédéterminée, notamment atteignent ou dépassent une valeur limite prédéterminée ou ne se trouvent pas dans un intervalle de valeurs prédéterminé.

4. Procédé selon la revendication 2 ou 3, **caractérisé en ce qu'**un signal d'erreur est généré dans le cas où l'image de profondeur ne comporte pas, pour les coordonnées X-Y, de valeurs de distance auxquelles on s'attend à associer des valeurs de distance indiquant la présence d'une face de cigarette.

5. Procédé selon la revendication 4, **caractérisé en ce que** l'image d'évaluation 2D est examinée pour détecter des défauts, en particulier des défauts des cigarettes (11} du groupe de cigarettes (12), tels que des défauts de tabac ou des défauts du contour des faces des cigarettes.

6. Procédé selon une ou plusieurs des revendications précédentes, **caractérisé en ce que** la caméra de champ lumineux (10) enregistre une image de champ lumineux d'une étiquette (25) reposant sur une bande de matériau (24), **en ce que**, en utilisant les informations de profondeur, on détermine la position spatiale d'au moins un bord extérieur (26) de l'étiquette (25) par rapport à la bande de matériau (24), et **en ce qu'**on vérifie si cette position correspond à une condition prédéterminée.

7. Procédé selon la revendication 6, **caractérisé en ce que** la position du bord (26) de l'étiquette est déterminée par rapport à un bord (28) d'un espace libre ou d'une découpe dans la bande de matériau (24) recouvert par l'étiquette (25) ou par rapport à un bord extérieur longitudinal (29) de la bande de matériau.

8. Procédé selon la revendication 7, **caractérisé en ce que** la position spatiale du bord extérieur d'espace libre ou de découpe (28) ou du bord extérieur longitudinal (29) est également déterminée en utilisant les informations de profondeur.

9. Procédé selon une ou plusieurs des revendications précédentes, **caractérisé en ce qu'**une image de champ lumineux d'une bande (33) reposant sur un paquet de cigarettes (32) entièrement ou partiellement terminé est saisie avec la caméra de champ lumineux (10), **en ce que** la position spatiale d'au moins un bord extérieur (34) de la bande (33) par rapport à au moins un côté du paquet sur lequel repose la bande (33) est déterminée en utilisant les informations de profondeur, et **en ce que** l'on vérifie si cette position correspond à une condition prédéterminée.

10. Procédé selon une ou plusieurs des revendications précédentes, **caractérisé en ce qu'**une image de champ lumineux d'un paquet de cigarettes (32) est enregistrée dans la zone de son couvercle (38) en utilisant la caméra de champ lumineux (10) et **en ce que**, en utilisant les informations de profondeur, on vérifie si le couvercle (38) est optionnellement ouvert de manière défectueuse, en particulier en détectant la position spatiale d'au moins un bord de couvercle (39).

11. Procédé selon une ou plusieurs des revendications précédentes, **caractérisé en ce que** la caméra de champ lumineux (10) enregistre une image de champ lumineux d'un flan (42) pour un paquet de cigarettes (32) présentant au moins un rabat de pliage (40) ainsi qu'au moins une rainure de pliage (41), en particulier dans la zone d'un poste de pliage (43) pliant l'au moins un rabat de pliage (40) du flan (42) le long de l'au moins une rainure de pliage (41), et **en ce que**, dans le cadre de l'évaluation, on vérifie, en utilisant les informations de profondeur, la taille ou la forme du flan (42) ou d'au moins une rainure de pliage (41) du flan (42), ou la taille, la forme ou la position d'au moins un rabat de pliage (40) du flan (42).

12. Procédé selon la revendication 11, **caractérisé en ce que**, dans le cadre de l'évaluation, on détermine, en utilisant les informations de profondeur, la position spatiale d'au moins une rainure de pliage (41) du flan (42) par rapport à au moins un bord extérieur (45) du flan (42) ou par rapport à un marquage, notamment une marque d'impression, agencé sur le flan (42).

13. Procédé selon une ou plusieurs des revendications précédentes, **caractérisé en ce qu'**une image de champ lumineux d'au moins une zone d'un flan ou d'une bande de matériau (46) pour la fabrication d'un paquet de cigarettes est enregistrée avec la caméra de champ lumineux (10), dans laquelle des gaufrages sont introduits ou doivent être introduits au moyen d'un rouleau de gaufrage (47), et **en ce que**, en utilisant les informations de profondeur, on vérifie si tous les gaufrages (48) attendus sont introduits ou si la taille ou la forme des gaufrages (48) ou leur position par rapport au flan ou à la bande de matériau (46) est défectueuse.

14. Procédé selon une ou plusieurs des revendications précédentes, **caractérisé en ce qu'**une image de champ lumineux d'une zone d'un flan ou d'une bande de matériau pour la fabrication d'un emballage de cigarettes est enregistrée avec la caméra de champ lumineux (10), des points de collage étant appliqués ou devant l'être, et **en ce que**, dans le cadre de l'évaluation, on vérifie, en utilisant les informations de profondeur, si tous les points de collage attendus sont appliqués ou si la taille ou la forme des points de collage ou leur position par rapport au flan ou à la bande de matériau est sans défaut.
